# EUROPÄISCHE PATENTSCHRIFT

(11) **EP 2 431 153 B1**
(45) Veröffentlichungstag und Bekanntmachung des Hinweises auf die Patenterteilung: **06.01.2016**
(21) Anmeldenummer: 11180833.3
(22) Anmeldetag: 10.09.2011
(51) Int. Cl.: B29C 47/88, B29C 51/02

(54) **Verfahren zum Inline-Steuerung bei Folienanlagen**
Method for inline control for film assemblies
Procédé de commande en ligne dans des installations de feuilles

(30) Priorität: 17.09.2010 DE 102010040981
(43) Veröffentlichungstag der Anmeldung: 21.03.2012
(73) Patentinhaber: battenfeld-cincinnati Germany GmbH, 32547 Bad Oeynhausen (DE)
(72) Erfinder: Roth, Michael, 32549 Bad Oeynhausen (DE)

(56) Entgegenhaltungen:
- DE-A1- 19 961 743
- DE-B3-102008 043 536

## Beschreibung

Die Erfindung betrifft ein Verfahren zum Inline-Betrieb einer Folienanlage mindestens bestehend aus einem Extruder, einem Glättwerk mit nachgeschalteten Kühlwalzen und einer Tiefziehmaschine, wobei die Intensität der Kühlung der Folie durch die Eintauchtiefe der Kühlwalzen in die Folie und damit durch den Umschlingungsgrad der Folie um die Kühlwalzen bestimmt wird,

Das Thermoformen ist innerhalb der Kunststoffverarbeitung ein anerkanntes Verfahren zur Massenherstellung von Deckeln, Bechern und Schalen innerhalb der Verpackung. Bekannt sind im Bereich des Thermoformens sog. Inline und Offline Systeme. Bei Offline Systemen wird die Folie in einen Verarbeitungsschritt extrudiert und in einem separaten Schritt thermoformiert. Bei dem Inline System sind beide Schritte Extrusion und Thermoformen direkt hintereinander geschaltet. Dabei nutzt man den Effekt, dass die Wärme aus der Extrusion nur teilweise aus der Folie herausgekühlt wird und teilweise für den Thermoformprozeß genutzt wird.

Bekannt sind unterschiedliche Walzen- und Nachkühlwalzen Anordnungen von Vertikal, über schräg gestellte, bis horizontale Glättwerke. In Verbindung mit Walzen in unterschiedlichsten Breiten und Durchmesser.

Eine derartige Anlage ist beispielsweise aus der DE 20 2005 00612 U1 bekannt, bei der die Kühldauer durch den Grad der Umschlingung der Folie um die Kühlwalzen bestimmt wird.

Die bekannten Systeme zeigen jedoch diverse Nachteile auf. So lag zum Beispiel vor etwa 10 bis 20 Jahren bei einem Inline-System die Maschinenleistung noch bei durchschnittlich 300 bis 400kg Folie pro Stunde. In den letzten Jahren haben enorme Ausstoßsteigerungen bei den Tiefziehmaschinen zu hohen Ausstoßsteigerungen von 100% und mehr auf 800 bis 1000kg/h Folienleistung geführt. Ein wesentlicher Faktor für die Steigerung ist, dass die Folie mit erhöhter Temperatur (vorzugsweise 80° bis 135°C bei Polypropylen (PP)) in den Tiefzieher eingeführt wird, wobei eine einmalig für ein Tiefziehwerkzeug und Prozess eingestellte Temperatur möglichst gleichmäßig (Temperaturschwankungen < 2°C) sein soll und weder über Tag, noch Jahr schwanken sollte.

Derartige Inline-System verfügen bereits seit Jahren über eine Inlineverkettung in Form einer Schlaufensteuerung, die auf den Tiefzieher bzw. den Extrusionsteil einwirkt. Dabei wird Rechnung getragen, dass der Extrusionsprozess ein kontinuierlicher Prozess ist, jedoch der Tiefziehprozess diskontinuierlich in Bezug auf die Materialgeschwindigkeit. Eine kontrollierte Schlaufe, die auf gleichmäßige Länge geregelt wird, ist dabei zwischen den Aggregaten geschaltet und gleicht die unterschiedliche Fördergeschwindigkeit der Systeme aus. Dies wird auch in der DE 199 61 743 so offenbart. Weitere Verkettungen besonders hinsichtlich Temperatur sind bisweilen nicht eingeführt.

Zwar hat man versucht, die Temperaturunterschiede durch einkapseln des Schlaufenraumes oder durch Walzentemperaturregelung auszugleichen, doch hat sich besonders Zweitgenanntes nicht etabliert, weil die Veränderung der Walzentemperatur direkt auf die Spaltweite und damit auf die Foliendicke Einfluss hat und zweitens die Änderung der Walzentemperatur nur unzureichend schnell eingreift.

Hierdurch wird das Handling solcher Systeme heutzutage sehr schwierig. Beim Start der Maschine muss das Foliengut in dem relativ kleinen Bauraum zwischen Extrusion und Tiefziehen gehandhabt werden. Handhaben heißt in diesem Fall, abschneiden der mit 80° bis 135°C heißen Folie auf ca. 1,5m lange Stücke und ablegen auf einer Palette, wobei die Folie beim Ablegen mitunter zusammenschweißt und damit zu einem nicht mehr zerkleinerbaren Block wird. Das Ganze bei einer Abzugsgeschwindigkeit von 6 bis 20m/min Dies bedeutet: Ungefähr alle 6 sec. ist ein manueller Schnitt durchzuführen, wobei ein relative hohe Verletzungsgefahr (Verbrennen, Schnittverletzung) vorherrscht. Diese Anfahrphase dauert etwa 10 bis 20min. bis die Folienstärke und Breite auf das richtige Maß eingestellt ist.

Danach folgt der kontinuierliche Betrieb, wobei bedingt durch äußere Einflüsse, wie Temperaturunterschiede zwischen Tag und Nacht von typisch 10° bis 25°C, Sommer-/Wintereinflüsse oder selbst normale Prozessschwankungen, ein fortwährendes Nachregeln der Tiefziehmaschine und/oder Produktschwankungen bedingen. Liegt bei der Tiefziehmaschine eine Unterbrechung im Ablauf des Tiefziehens vor, muss wiederum der oben beschriebene Schlaufenraum von Bedienern betreten werden und das nicht mehr vom Tiefzieher eingezogenen Material manuell abgeschnitten werden (ähnlich dem oben beschriebenen Startprozess). Gleiches gilt für eine Umstellung auf ein anderes Tiefziehprodukt.

Die DE 10 2008 043 536 B3 offenbart ein Glättwerk bei dem der Umschlingungsgrad der Folie um die Walzen verändert werden kann, um die Kühlleistung zu beeinflussen.

Die DE 199 61 743 A1 offenbart ein Verfahren bei der die Folie ein Schlaufe als Puffer aufbaut, damit insbesondere bei einem Tiefziehprozess die Folienextrusion kontinuierlich beibehalten werden kann.

Aufgabe der Erfindung ist es daher eine Verbesserung des Start- und des Allgemeinprozesses sowie die Vergleichmäßigung der Folientemperatur zu erreichen, wobei möglichst eine exakte Temperaturführung sowie schnelle Reaktions- und Eingreifzeit erreicht werden sollen.

Die **Lösung** der Aufgabe ist in Verbindung mit dem Oberbegriff des Anspruchs 1 dadurch gekennzeichnet, dass die Temperatur der Folie zwischen dem Glättwerk und der Tiefziehmaschine gemessen wird, die Messdaten in einer Datenverarbeitungslage einem Regelkreis zugänglich gemacht werden, mittels des Regelkreises die Intensität der Kühlung durch die Kühlwalzen bestimmt wird, damit eine gleich bleibende Folientemperatur im Einlauf der Tiefziehmaschine ermöglicht wird, wobei für die Startphase oder bei Unterbrechungen oder bei Umstellarbeiten die Kühlwalzen automatisch oder durch Auslösen eines Steuersignals derart verfahren werden, dass die Folie eine maximale Umschlingung um die Kühlwalzen aufweist, wodurch unbeeinflusst von Dicke und Breite der Folie einer maximalen Kühlung unterzogen wird.

Somit wird während der Startphase, Unterbrechungen oder Umstellarbeiten die Folie durch manuelles oder automatisches Auslösen eines Signals automatisch in eine maximal Umschlingung gebracht, so dass unbeeinflusst von Dicke und Breite (die für die Produktion der Tiefziehmaschine essentiellen Faktoren) die Folie mit max. Kühle aus dem Extrusionsteil heraustritt und in deutlich verbesserten Handlingsbedingungen dem Anlagenbediener zum Abschneiden und Stapeln zur Verfügung stehen.

Bei Freigabe der Automatikfunktion können direkt wieder innerhalb von Sekunden oder wenigen Minuten (1-3min.) die Kühlwalzen aus der Umschlingung herausgenommen werden und ein optimaler Produktionsprozess eingestellt werden.

Vorteilhafter Weise lässt sich die Temperatur der Kühlwalzen steuern und/oder regeln. Die Intensität der Kühlung erfolgt in Abhängigkeit der Temperaturmessung individuell über die gesamte Kühlstrecke durch individuelle Anpassung des Umschlingungsgrades und der damit verbundenen Nutzung der jeweiligen Walzentemperatur abhängig vom Umschlingungsgrad. Sie kann aber auch durch die Auswahl einer geeigneten Anzahl an Walzen bestimmt werden, also mehr oder weniger Walzen sind im Eingriff.

Weitere Vorteile werden erreicht in dem eine Kombination der obigen Regelung mit mehr oder weniger in der Eindringtiefe verstellbaren Nachkühlwalzen kombiniert wird, um abhängig von der gewünschten Endtemperatur die optimale Kühlleistung vorzuhalten.

Die Auswahl der Nachkühlwalzendurchmesser liegt vorzugsweise bei 250mm, jedoch auch zwischen 120-400mm.

Die Verstellung der Nachkühlwalzen kann auch in horizontaler Richtung - in oder gegen Extrusionsrichtung- erfolgen. Weiterhin kann die Verstellung nicht nur Zentral, sondern auch individuell erfolgen, also erste Walze unabhängig von der dritten Walze, dritte Walze unabhängig von der fünften Walze usw., wenn man davon ausgeht, dass die zweite, vierte, sechste Walze usw. die jeweiligen Gegenwalzen eines Paares sind

Gleiche gilt auch für die Temperatureinstellung der Nachkühlwalzen, auch diese kann individuell erfolgen. Hierbei wird die Messung mit mehreren Temperaturmessstellen entlang der Folienbahn durchgeführt, um so zur kontrollierten Beeinflussung von individueller Eindringtiefe und individueller Temperatur zu gelangen.

In den Zeichnungen ist schematisch eine Vorrichtung gezeigt mit der das erfindungsgemäße Verfahren realisierbar ist.
- Fig. 1: zeigt schematisch ein Gesamtsystem,
- Fig. 2: den Kühlbereich mit minimaler Kühleffekt und
- Fig. 3: den Kühlbereich mit maximalem Kühleffekt

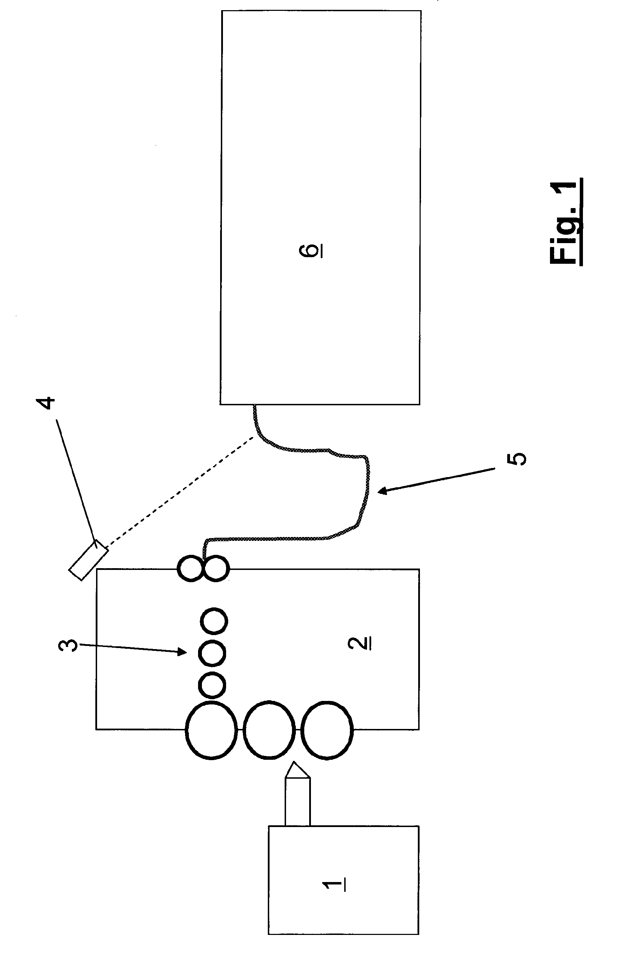

Figur 1 zeigt ein Gesamtsystem mit einem Extruder 1 mit Düse, einem Glättwerk 2 mit Hauptwalzen und Nachkühlwalzen 3 sowie einer direkt angeordneter Tiefziehmaschine 6. Zwischen Glättwerk 2 und Tiefziehmaschine 6 verläuft die Folie in einer Schlaufe 5. Über eine Messeinrichtung, hier ein Infrarotsensor, wird die Temperatur der Folie im Einlaufbereich der Tiefziehmaschine erfasst.

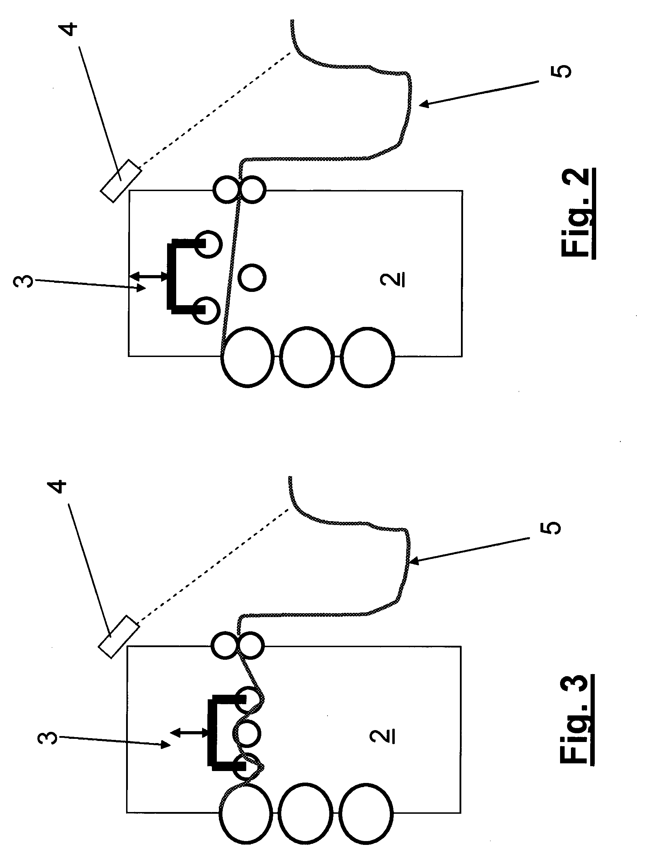

Figur 2 zeigt die oberen Hauptwalzen an die sich die Kühlstrecke besteht aus mehreren nachgeschalteten Kühlwalzen 3 anschließt. Die Anordnung der Walzenpaare ist so gewählt, dass diese für die Folie einen durchlaufenden Walzenspalt bilden, also ein minimale Kühlung.

Im Gegensatz hierzu ist in Figur 3 die Anordnung der Kühlwalzen 3 versetzt gewählt, die oberen Kühlwalzen tauchen in die unteren Kühlwalzen ein, die Kühlstrecke für die Folie wird somit länger. Die Folie kann nun über diese Anordnung der Walzenpaare so durchgeführt werden, dass ein max. Einfluss der Kühlwalzentemperatur auf die Folie möglich ist.

Damit ist ein Baustein zur schnellen Einstellung einer beliebigen Folientemperatur erreicht.

Durch die Erfindung wird neben der Produktionseffizienz ferner ein Beitrag zur Energieeinsparung geliefert, weil die Folie immer nah an der möglichen Temperaturgrenze in den Thermoformer eingeführt werden kann. Eine etwaige Klimatisierung des Zwischenraumes zwischen Folienherstellung und Thermoformer kann entfallen.

### Bezugszeichenliste:

- 1: Extruder mit Düse
- 2: Glättwerk mit Haut- und Nachkühlwalzen
- 3: Nachkühlwalzen
- 4: Messeinrichtung
- 5: Folienschlaufe zwischen 2 und 6
- 6: Tiefziehmaschine

## Patentansprüche

1. Verfahren zum Inline-Betrieb einer Folienanlage mindestens bestehend aus einem Extruder (1), einem Glättwerk (2) mit nachgeschalteten Kühlwalzen (3) und einer Tiefziehmaschine (6), wobei die Intensität der Kühlung der Folie durch die Eintauchtiefe der Kühlwalzen (3) in die Folie und damit durch den Umschlingungsgrad der Folie um die Kühlwalzen (3) bestimmt wird, wobei
die Temperatur der Folie zwischen dem Glättwerk (2) und der Tiefziehmaschine (6) gemessen wird, **dadurch gekennzeichnet, dass**
die Messdaten in einer Datenverarbeitungslage einem Regelkreis zugänglich gemacht werden,
mittels des Regelkreises die Intensität der Kühlung durch die Kühlwalzen (3) bestimmt wird,
damit eine gleich bleibende Folientemperatur im Einlauf der Tiefziehmaschine (6) ermöglicht wird,
**wobei für die Startphase oder bei Unterbrechungen oder bei Umstellarbeiten die Kühlwalzen (3) automatisch oder durch Auslösen eines Steuersignals derart verfahren werden, dass die Folie eine maximale Umschlingung um die Kühlwalzen (3) aufweist, wodurch unbeeinflusst von Dicke und Breite der Folie einer maximalen Kühlung unterzogen wird.**

2. Verfahren nach Anspruch 1, **dadurch gekennzeichnet, dass** das die Temperatur der Kühlwalzen (3) gesteuert und/oder geregelt wird.

3. Verfahren nach Anspruch 1 oder 2, **dadurch gekennzeichnet, dass** die Intensität der Kühlung in Abhängigkeit der gemessenen Temperatur individuell über die gesamte Kühlstrecke durch individuelle Anpassung des Umschlingungsgrades erfolgt.

4. Verfahren nach Anspruch 1, 2 oder 3 **dadurch gekennzeichnet, dass** die Intensität der Kühlung durch eine Auswahl der Anzahl der Walzen bestimmt wird.

## Claims

1. Method for the inline-operation of a film extrusion line, comprising at least one extruder (1), a calender (2) with cooling rollers situated downstream (3), as well as a thermoforming machine (6),
the cooling intensity of the film being determined by the immersion depth of the cooling rollers (3) into the film, that is, by the arc of contact of the film around the cooling rollers (3),
the temperature of the film being measured between the calender (2) and the thermoforming machine,
the measured data being transmitted by a data processing system to a control loop,
the control loop serving for the regulation of the cooling intensity of the cooling rollers (3),
thus allowing for a steady film temperature at the inlet of the thermoforming machine (6),
the cooling rollers being adjusted automatically or by triggering a control signal during the launch phase or in cases of interruption or changeover in such a way that the film has a maximum arc of contact around the cooling rollers (3), thus ensuring that independently of its thickness and width the film is being maximally cooled.

2. Method according to claim 1, **characterized in that** the temperature of the cooling rollers (3) is controlled and/or regulated.

3. Method according to one of the claims 1 or 2, **characterized in that** the cooling intensity is individually determined throughout the whole cooling section dependently on the measured temperature by adapting the arc of contact.

4. Method according to one of the claims 1, 2, or 3, **characterized in that** the cooling intensity is determined by adapting the number of cooling rollers.

## Revendications

1. Procédé pour le fonctionnement en ligne d'une installation d'extrusion d'un film plastique, comprenant au moins une extrudeuse (1), une calandre (2) suivie par des rouleaux de refroidissement (3) et une machine d'emboutissage,
l'intensité de refroidissement dépendant de la profondeur d'immersion des rouleaux de refroidissement dans le film plastique, en d'autre termes du dégrée d'enroulement du film plastique autour des rouleaux de refroidissement (3),
la température du film plastique étant mesurée entre la calandre (2) et la machine d'emboutissage,
les données de mesure étant transmises à un circuit de régulation par une unité de traitement de données,
l'intensité de refroidissement effectuée par les rouleaux de refroidissement étant régulée moyennant le circuit de régulation
afin de réaliser une température constante à l'entrée de la machine d'emboutissage (6),
**les rouleaux de refroidissement étant ajustés durant la phase initiale ou en cas d'interruptions ou d'opérations de changement automatiquement ou après déclenchement du signal de commande de telle manière que le film plastique ait le plus haut dégrée possible d'enroulement autour des rouleaux de refroidissement (3), afin que le film plastique soit refroidi au maximum, indépendamment de son épaisseur ou sa largeur.**

2. Procédé selon revendication 1, **caractérisé en ce que** la température des rouleaux de refroidissement (3) est contrôlée et/ou réglée.

3. Procédé selon revendication 1 ou 2, **caractérisé en ce que** l'intensité de refroidissement est réalisée individuellement à travers toute la section de refroidissement en dépendance de la température mesurée par l'ajustement du dégrée d'enroulement.

4. Procédé selon l'une quelconque des revendications 1, 2 ou 3, **caractérisé en ce que** l'intensité de refroidissement est déterminée par le choix du nombre de rouleaux.
